# EUROPÄISCHE PATENTANMELDUNG

(11) **EP 0 875 852 A2**
(43) Veröffentlichungstag der Anmeldung: **04.11.1998**
(21) Anmeldenummer: 98107337.2
(22) Anmeldetag: 22.04.1998
(51) Int. Cl.: G06K 19/07

(54) **Chipkarte mit Mikrocontrollerschaltung**

(30) Priorität: 30.04.1997 DE 19718446
(71) Anmelder: SIEMENS AKTIENGESELLSCHAFT, 80333 München (DE)
(72) Erfinder: Zettler, Thomas, Dr., 81737 München (DE); Sedlak, Holger, 85658 Egmating (DE); Georgakos, Georg, 85447 Fraunberg (DE); Tempel, George, Dr., 85604 Zorneding (DE); Winnerl, Josef, Dr., 81929 München (DE)

(57) **Zusammenfassung**

Es wird eine Chipkarte mit einem eine Mikrocontrollerschaltung aufweisenden Halbleiterchip beschrieben. Die Mikrocontrollerschaltung weist als Programmspeicher einen Flash-Speicher (FS) auf. In vorteilhafter Weise können auch andere Speicherarten (ROM, EEPROM) zusätzlich als Programmspeicher verwendet werden.

## Beschreibung

Durch den Einsatz von Mikrocontrollern in integrierten Schaltungen für Chipkarten kann die Sicherheit der in der Karte gespeicherten oder durch die Karte zu verarbeitenden Daten wesentlich erhöht werden. Die Mikrocontrollerschaltung arbeitet ein zumindest teilweise in der Karte gespeichertes Programm (z.B. Betriebssystem und Anwenderprogramme) ab. Zur nicht-flüchtigen Speicherung dieses Programmes wurden bisher ROM-und EEPROM-Schaltungen eingesetzt (siehe zB. Produktschrift der Fa. Philips "ICs for Chip Cards, 07/96)

ROM-Schaltungen haben den Nachteil, daß die Daten während der Fertigung durch einen Maskenschritt festgelegt werden und nachträglich nicht mehr an neue Anforderungen angepasst werden können. Neben der Unveränderlichkeit der Daten weist dieses Verfahren einen weiteren Nachteil auf: Die Daten müssen schon sehr früh vor dem Liefertermin der Karte verfügbar sein. Damit wird die Reaktionszeit und Time to Market deutlich reduziert.

EEPROM-Schaltungen können zwar wieder gelöscht und mit neuen Daten beschrieben werden. Sie haben jedoch den Nachteil eines großen Flächenbedarfs und damit hoher Chipkosten.

Die Aufgabe vorliegende Erfindung ist es daher, eine Chipkarte mit Mikrocontrollerschaltung anzugeben, die diese Nachteile vermeidet.

Die Aufgabe wird dadurch gelöst, daß die Mikrocontrollerschaltung einen Flash-Speicher als Programmspeicher aufweist Vorteilhafte Weiterbildungen der Erfindung ergeben sich aus den Unteransprüchen.

Die Erfindung beschreibt die Einführung eines Flash-Speichers als Programmspeicher, der bei kleiner Fläche und damit kostengünstiger Herstellung die mehrfache Änderung der Daten nach Abschluß des Herstellprozesses erlaubt. Weiterhin wird der Einsatz einer derartigen Chipkarte für multifunktionale Anwendungen beschrieben.

Die Erfindung wird nachfolgend anhand von Ausführungsbeispielen mit Hilfe von Figuren näher erläutert. Dabei zeigen
- Figur 1: ein Blockschaltbild einer ersten erfindungsgemäßen Mikrocontrollerschaltung und
- Figur 2: ein Blockschaltbild einer zweiten erweiterten Ausführung.

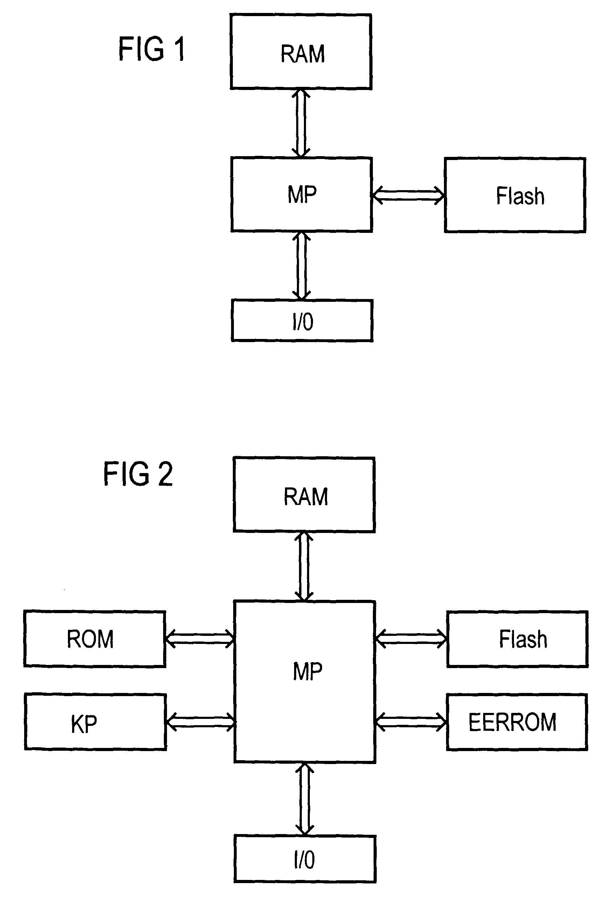

In Fig.1 ist das Blockschaltbild eines erfindungsgemäßen Mikrocontrollerschaltungs für Chipkarten dargestellt. Ein Mikroprozessor MP ist mit einem Flash-Speicher FS als Programmspeicher verbunden. Die Schaltung enthält kein ROM. Der Flash-Speicher ist in besonders vorteilhafter Weise ein Flash-Speicher mit Programmierung durch den Fowler-Nordheim-Effekt. Bei dieser Art der Programmierung wird im Gegensatz zur Programmierung mit dem Hot-Electron-Effekt sehr wenig Strom verbraucht, was eine leistungssparende Schaltung ermöglicht. Ebenso ist die Gefahr der Ausspähung von Daten durch Messung der Stromaufnahme weitgehend ausgeschlossen.

Weiterhin vorteilhaft ist der Einsatz eines Flash-Speichers mit negativer Programmierspannung auf dem Controlgate wie er in der Druckschrift "A 0.5µm CMOS Technology for Multifunctional Applications with Embedded FN-Flash Memory and Linear R and C Modules" von R. Heinrich, W. Heinrigs, G. Tempel, J. Winnerl, T. Zettler, in Proc. of the International Electron Devices Meeting (IEDM) 1993, p. 445-448 beschrieben wird. Bei einem derartigen Speicher kann die positive Spannung im Draingebiet der Speicherzellen auf kleine Werte (z. B. 5V) begrenzt werden, was die Miniaturisierung der Schaltung erlaubt. Das wiederum ergibt einen Kostenvorteil.

Der Doppelpfeil in Fig. 1 deutet die wechselseitige Übertragung von Daten und Steuersignalen zwischen dem Mikroprozessor MP und dem Flash-Speicher an. Der Flash-Speicher kann in dieser Konfiguration auch zur Zwischenspeicherung von Daten genutzt werden. Hier ist zu beachten, daß die zwischenzuspeichernden Daten in einem anderen Block als die Programme abgelegt werden müssen, da vor jeder Schreiboperation ein Gesamtlöschen des Blocks erfolgen muß. Die Controllerschaltung verfügt weiterhin über ein RAM zur schnellen flüchtigen Speicherung von Daten. Der als I/0 bezeichnete Input/Output-Block steht entweder für Pad-Eingabe und Ausgabeschaltungen (z. B. serielle Schnittstelle und Pad-Treiber) oder für drahtlose Ein und Ausgabeschaltungen (z.B. RF-Datenübermittlung)

In Fig. 2 ist eine stark erweiterte Ausführung der Erfindung dargestellt. Die Schaltung enthält wie bereits bei Fig. 1 beschrieben einen Mikroprozessor MP, einen Flash-Speicher FS, ein RAM und eine I/0 Schaltung.

Im Gegensatz zu Fig. 1 ist hier jedoch zusätzlich ein ROM vorhanden. Dieses ROM kann Programmdaten speichern, welche niemals oder nur sehr selten geändert werden müssen, wie z.B. Basisroutinen. Die Chipkarte arbeitet somit teilweise mit Programmdaten aus dem ROM und teilweise mit Programmen aus dem Flash-Speicher.

Weitere Bestandteile der Schaltung sind ein EEPROM und ein Kryptokoprozessor KP. Das EEPROM kann zur nichtflüchtigen Zwischenspeicherung von Berechnungsdaten genutzt werden. Durch die Programmier- und Löschbarkeit in kleinen Einheiten (z. B. Byteweise) ist dieser Vorgang im EEPROM effizienter als im Flash. Der Kryptokoprozessor dient der Verschlüsselung und Entschlüsselung von Daten für Hochsicherheitsanwendungen. Der Prozessor kann hierfür z.B. einen asymmetrischen Verschlüsselungsalgorhitmus ausführen. Der Koprozessor KP ermöglicht durch seine besondere Struktur die Ausführung der Berechnung in einer wesentlich kürzeren Zeit als dies mittels des normalen Prozessors möglich wäre.

Der Einsatz eines Flash-Programmspeichers erlaubt wie bereits erwähnt die nachträgliche Modifikation der Programme. Das ermöglicht die multifunktionale Nutzung der Chipkarte. So kann z.B. beim Ausgabezeitpunkt der Karte ein Teil des Flash-Speichers mit einem Anwenderprogramm belegt werden. Dieses Anwenderprogramm kann durch einen Lösch- und Neuprogrammierschritt durch ein anderes Programm oder z.B. eine neue Version der bestehenden Software ersetzt werden. Weiterhin können ein oder mehrere weitere Anwenderprogramme hinzugeladen werden. Liegen diese Programme im gleichen Löschblock wie das erste Programm, so muß auch das erste Programm neu nachgeladen werden. Liegen die neuen Programme in anderen Blöcken des Flash-Speichers, so bleibt das erste Programm unverändert bestehen.

Die wesentlichen Vorteile der Erfindung bestehen in hoher Flexibilität, schneller Reaktionszeit (Time to Market) und geringer Chipfläche, wodurch solche Mikrocontroller kostengünstiger sind.

## Patentansprüche

1. Chipkarte mit einem eine Mikrocontrollerschaltung aufweisenden Halbleiterchip,
**dadurch gekenzeichnet,**
daß die Mikrocontrollerschaltung einen Flash-Speicher (FS) als Programmspeicher aufweist.

2. Chipkarte nach Anspruch 1,
**dadurch gekennzeichnet,**
daß die Mikrocontrollerschaltung zusätzlich ein ROM als Programmspeicher aufweist.

3. Chipkarte nach einem der Ansprüche 1 oder 2,
**dadurch gekennzeichnet,**
daß der Flash-Speicher mittels des Fowler-Nordheim-Effekts programmier- und löschbar ist.

4. Chipkarte nach einem der Ansprüche 1 bis 3,
**dadurch gekennzeichnet,**
daß der Flash-Speicher mittels negativer Programmierspannung am Controlgate einer Flash-Speicherzelle programmierbar ist.
